# FASCICULE DE BREVET EUROPEEN

(11) **EP 2 455 717 B1**
(45) Date de publication et mention de la délivrance du brevet: **26.02.2014**
(21) Numéro de dépôt: 11190148.4
(22) Date de dépôt: 22.11.2011
(51) Int. Cl.: G01C 23/00, G01C 17/38

(54) **Instrument pour aéronef combinant magnétomètre de secours et procédé de calibration.**
Kombiniertes Flugzeug-Magnetometer für In-Flight-Kalibrieren für Notfälle.
Combined aircraft magnetometer for in-flight calibration and emergency use.

(30) Priorité: 23.11.2010 FR 1004558
(43) Date de publication de la demande: 23.05.2012
(73) Titulaire: Thales, 92200 Neuilly Sur Seine (FR)
(72) Inventeur: Gerthoffert, Damien, 41100 VENDOME (FR); Colliau, Florent, 41190 CHAMBON SUR CISSE (FR); Jaulain, Yves, 86140 SCORBE CLAIRVAUX (FR)
(74) Mandataire: Collet, Alain

(56) Documents cités:
- FR-A1- 2 937 415
- US-A1- 2006 212 182

## Description

L'invention concerne un instrument combiné de secours et un procédé de calibration de l'instrument combiné de secours. Un tel instrument est destiné à équiper la planche de bord d'un aéronef. Il comprend un calculateur permettant de déterminer une altitude, une vitesse et une attitude de l'aéronef à partir de capteurs appartenant à l'instrument et un écran permettant d'afficher l'altitude, la vitesse et l'attitude de l'aéronef. Cet instrument permet de donner au pilote de l'aéronef des informations de vol utilisées en cas de panne des instruments de bord primaires de l'aéronef.

Le pilote de l'aéronef a également besoin d'informations de navigation lui permettant de suivre un plan de vol. Parmi ces informations, le cap lui permet de diriger l'aéronef par rapport au nord magnétique. Le cap peut être obtenu à partir d'un capteur magnétique généralement situé loin de la planche de bord. En effet, ce capteur, mesurant le champ magnétique terrestre, peut être perturbé par l'aéronef lui-même et notamment par les instruments de bord qui génèrent des perturbations électromagnétiques. Ces instruments étant nombreux dans la planche de bord, on cherche à éloigner le capteur magnétique, par exemple en le plaçant hors du cockpit de l'aéronef.

On prévoit également en secours un compas de route dans le cockpit de l'aéronef pour pallier un éventuel défaut dans la chaîne d'information primaire présentant au pilote l'information de cap. Ce compas de secours est communément disposé en partie haute de la verrière du cockpit, cet endroit étant le plus éloigné des autres instruments de bord, donc le moins perturbé par ceux-ci.

Bien que les capteurs magnétiques soient disposés dans les endroits les moins perturbés possibles, une déviation magnétique subsiste qu'il est nécessaire de compenser. A cet effet, on prévoit une procédure de compensation permettant de corriger les effets de l'aéronef et de tous les instruments qu'il comporte. Cette procédure prévoit par exemple de mesurer la direction du champ magnétique au moyen du capteur à compenser lors de déplacements angulaires de l'aéronef sur une piste d'un aérodrome. On compare ensuite les mesures au champ magnétique terrestre de l'aérodrome afin d'établir une courbe de déviation que l'on pourra utiliser en vol pour compenser les perturbations sur le capteur. Pour ce faire, on connecte au capteur un instrument spécifique permettant de récupérer directement la mesure faite par le capteur avant que cette mesure ne soit traitée pour obtenir un affichage lisible par le pilote de l'aéronef. Le capteur magnétique associé aux instruments primaires ainsi que le compas de secours peuvent être compensés.

Par ailleurs, on a tenté d'utiliser l'instrument de secours pour déterminer et afficher le cap suivi par l'aéronef. Ce cap peut être utilisé lorsque les instruments primaires de l'aéronef sont défaillants comme par exemple décrit dans la demande de brevet FR 2 937 415 déposée le 17 octobre 2008 au nom de la demanderesse. Ce document décrit l'utilisation de capteurs magnétiques internes à l'instrument de secours pour déterminer et afficher le cap suivi par l'aéronef. Ce document décrit également une procédure de calibration utilisant l'instrument de secours lui-même et son écran d'affichage. Cette procédure de calibration est intéressante car elle ne nécessite aucun instrument spécifique devant être connecté à l'instrument de secours pour le traitement des données recueillies. Dans la pratique cette procédure n'est utilisable que dans des conditions où les instruments primaires de l'aéronef fonctionnent correctement. En effet la procédure de calibration décrite dans le document FR 2 937 415 utilise complètement l'écran de l'instrument de secours durant la calibration. Durant la calibration il est impossible d'accéder aux informations de base délivrées par l'instrument de secours comme l'altitude, la vitesse et l'attitude de l'aéronef. Par exemple, en vol, lorsque les instruments primaires sont défaillants, le pilote utilise l'instrument de secours pour connaitre les informations de vol nécessaires au pilotage. Si une calibration magnétique de l'instrument de secours est nécessaire, celle-ci prive de pilote de toutes informations de vol durant la calibration, ce qui peut être préjudiciable à la sécurité du vol.

Il existe en aéronautique civile une procédure prévoyant un vol au cours duquel l'avion est recetté. Au cours de ce vol, tous les instruments doivent être opérationnels, les instruments primaires et les instruments de secours. En conséquence, il est impossible d'utiliser ce vol pour effectuer la calibration des capteurs magnétiques internes à l'instrument de secours. L'utilisation d'un autre vol pour la calibration entraine des coûts supplémentaires pour l'avionneur.

L'invention vise à pallier ce problème en permettant une procédure de calibration magnétique de l'instrument de secours sans perte de l'affichage des informations de vol.

A cet effet, l'invention a pour objet un instrument combiné de secours destiné à équiper la planche de bord d'un aéronef et comprenant des capteurs anémobarométriques, des capteurs inertiels, un capteur de champ magnétique, un écran et un calculateur permettant de déterminer et d'afficher sur l'écran une altitude, une vitesse, une attitude et un cap courant de l'aéronef à partir des capteurs et de calibrer le capteur de champ magnétique, caractérisé en ce que le calculateur est configuré pour permettre simultanément :
- la détermination et l'affichage sur l'écran de l'altitude, de la vitesse et de l'attitude de l'aéronef,
- la calibration du capteur de champ magnétique et
- l'affichage sur l'écran d'un guide pour la calibration du capteur de champ magnétique.

L'invention a également pour objet un procédé de calibration d'un instrument combiné de secours destiné à équiper la planche de bord d'un aéronef et comprenant des capteurs anémobarométriques, des capteurs inertiels, un capteur de champ magnétique, un écran et un calculateur permettant de déterminer et d'afficher sur l'écran une altitude, une vitesse, une attitude et un cap courant de l'aéronef à partir des capteurs, caractérisé en ce qu'il consiste à réaliser simultanément :
- la détermination et l'affichage sur l'écran de l'altitude, de la vitesse et de l'attitude de l'aéronef,
- la calibration du capteur de champ magnétique et
- l'affichage sur l'écran d'un guide pour la calibration du capteur de champ magnétique.

Les opérations simultanées peuvent être réalisées par un seul processeur réalisant des tâches pseudo parallèles de façon transparente pour un utilisateur. Autrement dit, l'utilisateur conserve un service continu à la fois pour la calibration et pour la lecture sur l'écran des paramètres de vol (altitude, vitesse et attitude de l'aéronef).

L'invention sera mieux comprise et d'autres avantages apparaîtront à la lecture de la description détaillée d'un mode de réalisation donné à titre d'exemple, description illustrée par le dessin joint dans lequel :
la figure 1 représente un instrument combiné de secours dont l'affichage est en mode opérationnel ;
la figure 2 représente un instrument combiné de secours dont l'affichage est en mode de calibration ;

Par souci de clarté, les mêmes éléments porteront les mêmes repères dans les différentes figures.

Un instrument de secours permet de déterminer et d'afficher de façon autonome, une altitude, une vitesse, une attitude et un cap de l'aéronef à partir de capteurs appartenant à l'instrument. En cas de défaut des instruments primaires ou de défauts d'affichage des écrans de visualisation primaire, l'écran de l'instrument de secours est utilisé par les pilotes de l'aéronef. En phase de vol, les pilotes observent néanmoins l'écran de l'instrument de secours et notent les écarts éventuels avec les informations délivrées par les instruments primaires.

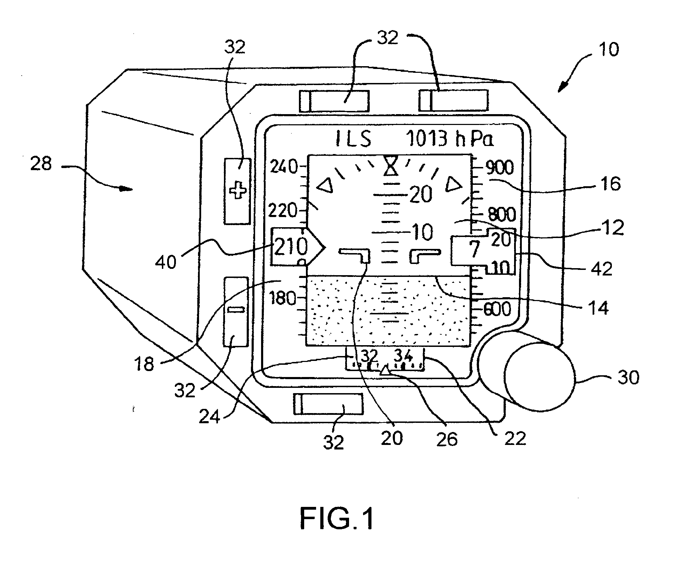

La figure 1 représente un instrument combiné de secours 10 équipant la planche de bord d'un aéronef. L'instrument 10 comporte un écran en couleur 12 utilisé en mode opérationnel pour l'affichage d'un horizon 14 (terre en marron au-dessous, ciel en bleu au-dessus) et de données de secours nécessaires au pilotage, à savoir principalement altitude sous forme d'une échelle graduée défilante 16 à droite, vitesse sous forme d'une autre échelle graduée défilante 18 à gauche, et un symbole 20 d'attitude de l'aéronef. Une zone 22 est réservée aux informations de cap présentés également sous forme d'une échelle graduée 24 défilant devant un index 26 fixe. Une autre échelle graduée 28 permet l'affichage du roulis de l'aéronef. L'échelle 28 est par exemple fixe et un index 30 peut se déplacer devant les différentes valeurs de l'échelle pour indiquer le roulis de l'aéronef.

L'affichage de l'horizon et des données numériques de vitesse, d'altitude et de cap est déterminé par un calculateur 32 situé dans le corps de l'instrument 10 à partir de signaux en provenance de capteurs dont certains sont extérieurs à l'instrument 10 et dont d'autres peuvent être à l'intérieur ou à l'extérieur de l'instrument 10. Les capteurs sont en général des capteurs de pression ou de débit (pour la vitesse et pour l'altitude) et une unité de mesure inertielle pour l'attitude et un ou plusieurs capteurs de champ magnétiques couramment appelés magnétomètres pour le cap. Avantageusement, les capteurs de pressions, l'unité de mesure inertielle et le magnétomètre sont situés à l'intérieur de l'instrument 10. Les capteurs de pression sont reliés à des prises de pression situés sur la peau de l'aéronef et permettant de mesurer la pression statique et la pression totale de l'air entourant l'aéronef.

L'instrument 10 comporte en général un bouton de réglage 34 servant au recalage de la pression atmosphérique en fonction de données communiquées localement (par exemple fournies par les services de météorologie à proximité d'un aéroport). Il comporte d'autres boutons de commande 36 servant à divers usages (recalage d'horizon, mise en place sur l'écran de marques de plages de vitesse ou d'altitude autorisées, etc.).

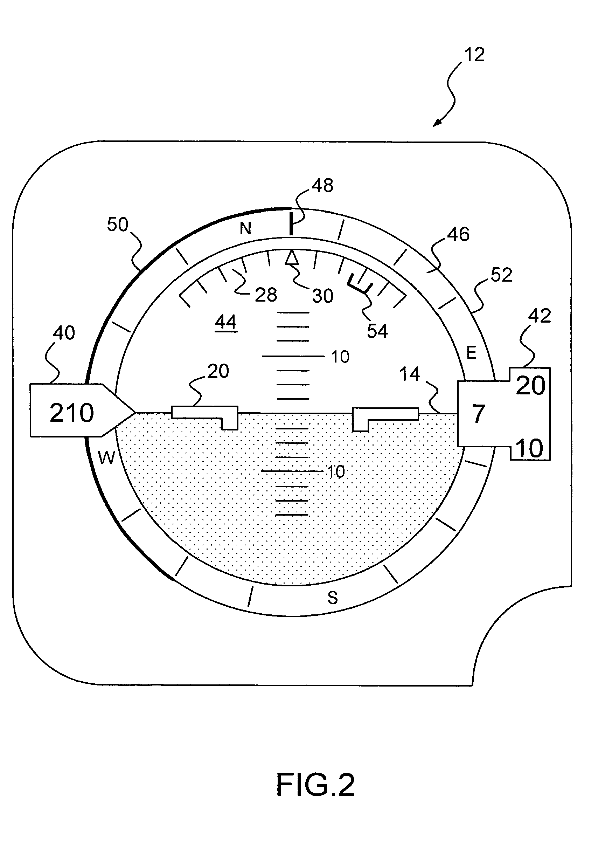

La figure 2 représente l'écran de l'instrument combiné de secours 10 dont l'affichage est en mode de calibration du magnétomètre. Le calculateur 32 de l'instrument combiné de secours est configuré pour permettre l'affichage simultané sur l'écran 12 d'une part de l'altitude, de la vitesse et de l'attitude de l'aéronef et d'autre part d'un guide pour la calibration du capteur de champ magnétique. Pour ne perturber le pilote de l'aéronef, l'affichage de horizon artificiel 14 et l'affichage du symbole 20 d'attitude de l'aéronef sont identiques dans les deux modes, opérationnel et calibration. On retrouve également l'échelle graduée 28 et l'index 30 permettant l'affichage du roulis de l'aéronef.

Les échelles graduées défilantes pour la vitesse et l'altitude sont simplifiées et dans l'exemple représenté on ne conserve que des loupes, 40 pour la vitesse et 42 pour l'altitude. Ces loupes reproduisent un affichage mécanique réalisé au moyen de roues juxtaposées tournant autour d'un axe horizontal. En tournant, les roues défilent verticalement devant une fenêtre pour ne laisser apparaître que la valeur courante de la vitesse ou de l'altitude. On reproduit sur l'écran 12 ces fenêtres, appelées loupes 40 et 42, que l'on retrouve dans l'affichage en mode opérationnel de la figure 1.

En revanche, la zone centrale 44 de l'écran 12, réservée à l'horizon, n'est plus carrée ou rectangulaire comme dans le mode opérationnel mais en forme de cercle entouré par une rose des vents 46 indiquant le cap courant suivi par l'aéronef. Le cap courant peut être donné par une référence externe.

Un repère fixe 48 indique le cap courant par rapport à la rose des vents 46 qui est mobile en rotation autour de la zone 44.

Le guide pour la calibration du capteur de champ magnétique comprend par exemple un programme de caps que l'aéronef doit atteindre pour réaliser la calibration. Ce programme est stocké dans une mémoire du calculateur 32. De plus, le calculateur est configuré pour déterminer et afficher, en cours de calibration, des indications de caps déjà atteints et des indications de caps restant à atteindre pour terminer la calibration. Les caps déjà atteints et les caps restant à atteindre peuvent être affichés sur le pourtour de la rose des vents 46. Dans l'exemple de la figure 2, les caps déjà atteints sont représenté en trait fort 50 et les caps à atteindre sont représentés en trait fin 52. Dans la pratique, on peut utiliser un code couleur sur le pourtour de la rose des vents 46. Le pourtour est vert pour les caps atteints et rouge pour les caps à atteindre.

Le fait de parcourir l'ensemble de la rose des vents 46 avec un roulis nul permet de calibrer le capteur de champ magnétique en deux dimensions dans un plan horizontal. Il est également possible de réaliser une calibration en trois dimensions en complétant le programme de caps dans un plan horizontal par un programme de caps à atteindre avec un roulis non nul. En pratique, on requiert du pilote qu'il réalise un premier tour complet de la rose des vents avec un roulis positif et un second tour avec un roulis négatif. Une consigne de roulis est par exemple donnée au repère 54. Pour atteindre ce roulis, le pilote doit faire coïncider l'index 30 avec la consigne 54.

Le programme de caps et éventuellement de roulis à atteindre appartient à une première étape d'une procédure de calibration. Dès que le programme est réalisé par le pilote, une seconde étape de la procédure de calibration est lancée. Au cours de cette seconde étape le calculateur 32 détermine des facteurs de calibration du capteur de champ magnétique en fonction du type de calibration retenu, avec ou sans roulis.

La seconde étape peut prévoir de comparer les facteurs de calibration déterminés à des valeurs limites prédéterminées. Si l'un des facteurs est hors de ses valeurs limites, un message d'alerte apparait sur l'écran 12 et une invitation est faite au pilote pour recommencer la procédure de calibration et ses deux étapes.

Autrement dit lors de la calibration du capteur de champ magnétique on enchaine les opérations suivantes :
- choisir entre une calibration en deux dimensions ou en trois dimensions ;
- acquérir des données mesurées par le capteur de champ magnétique en suivant un programme de caps à parcourir sans roulis dans le cas d'une calibration en deux dimensions ou avec et sans roulis dans le cas d'une calibration en trois dimensions ;
- déterminer des facteurs de calibration du capteur de champ magnétique en fonction de la calibration retenue, en deux dimensions ou en trois dimensions ;
le guide de calibration permettant de suivre l'avancement du programme de caps à parcourir avec et/ou sans roulis lors de l'acquisition des données.

## Revendications

1. Instrument combiné de secours destiné à équiper la planche de bord d'un aéronef et comprenant des capteurs anémobarométriques, des capteurs inertiels, un capteur de champ magnétique, un écran (12) et un calculateur (32) permettant de déterminer et d'afficher sur l'écran une altitude (42), une vitesse (40), une attitude (14) et un cap courant (48) de l'aéronef à partir des capteurs et de calibrer le capteur de champ magnétique, **caractérisé en ce que** le calculateur (32) est configuré pour permettre simultanément :
• la détermination et l'affichage sur l'écran (12) de l'altitude (42), de la vitesse (40) et de l'attitude (14) de l'aéronef,
• la calibration du capteur de champ magnétique et
• l'affichage sur l'écran (12) d'un guide (50, 52, 54) pour la calibration du capteur de champ magnétique.

2. Instrument combiné de secours selon la revendication 1, **caractérisé en ce qu'**à partir d'un programme stocké dans une mémoire du calculateur (32) et définissant des caps que l'aéronef doit atteindre pour réaliser la calibration, le calculateur est configuré pour déterminer et afficher, en cours de calibration, des indications de caps déjà atteints (50) et des indications de caps restant à atteindre (52) pour terminer la calibration.

3. Instrument combiné de secours selon la revendication 1, **caractérisé en ce qu'**à partir d'un programme stocké dans une mémoire du calculateur et définissant des caps et des roulis que l'aéronef doit atteindre pour réaliser la calibration, le calculateur est configuré pour déterminer et afficher, en cours de calibration, des indications de caps et de roulis (50, 54) déjà atteints et des indications de caps et de roulis (52, 54) restant à atteindre pour terminer la calibration.

4. Procédé de calibration d'un instrument combiné de secours destiné à équiper la planche de bord d'un aéronef et comprenant des capteurs anémobarométriques, des capteurs inertiels, un capteur de champ magnétique, un écran (12) et un calculateur (32) permettant de déterminer et d'afficher sur l'écran (12) une altitude (42), une vitesse (40), une attitude (14) et un cap courant (48) de l'aéronef à partir des capteurs, **caractérisé en ce qu'**il consiste à réaliser simultanément :
• la détermination et l'affichage sur l'écran (12) de l'altitude (42), de la vitesse (40) et de l'attitude (14) de l'aéronef,
• la calibration du capteur de champ magnétique et
• l'affichage sur l'écran (12) d'un guide (50, 52, 54) pour la calibration du capteur de champ magnétique.

5. Procédé selon la revendication 4, **caractérisé en ce qu'**il consiste à calibrer le capteur de champ magnétique en enchainant les opérations suivantes :
• choisir entre une calibration en deux dimensions ou en trois dimensions ;
• acquérir des données mesurées par le capteur de champ magnétique en suivant un programme de caps à parcourir sans roulis dans le cas d'une calibration en deux dimensions ou avec et sans roulis dans le cas d'une calibration en trois dimensions ;
• déterminer des facteurs de calibration du capteur de champ magnétique en fonction de la calibration retenue, en deux dimensions ou en trois dimensions ;
le guide de calibration permettant de suivre l'avancement du programme de caps à parcourir avec et/ou sans roulis lors de l'acquisition des données.

## Patentansprüche

1. Kombiniertes Notfallinstrument zum Ausstatten der Instrumententafel eines Luftfahrzeugs, das Folgendes umfasst: Wind- und Luftdrucksensoren, Trägheitssensoren, einen Magnetfeldsensor, einen Bildschirm (12) und einen Rechner (32), mit dem eine Höhe (42), eine Geschwindigkeit (40) eine Lage (14) und ein aktueller Kurs (48) des Luftfahrzeugs auf der Basis der Sensoren ermittelt und auf dem Bildschirm angezeigt werden können, und zum Kalibrieren des Magnetfeldsensors, **dadurch gekennzeichnet, dass** der Rechner (32) so konfiguriert ist, dass er gleichzeitig Folgendes zulässt:
• Ermittlung von Höhe (42), Geschwindigkeit (40) und Lage (14) des Luftfahrzeugs und Anzeigen derselben auf dem Bildschirm (12);
• Kalibrieren des Magnetfeldsensors; und
• Anzeigen eines Führers (50, 52, 54) zum Kalibrieren des Magnetfeldsensors auf dem Bildschirm (12).

2. Kombiniertes Notfallinstrument nach Anspruch 1, **dadurch gekennzeichnet, dass** der Rechner so konfiguriert ist, dass er auf der Basis eines in einem Speicher des Rechners (32) gespeicherten Programms, das Kurse definiert, die von dem Luftfahrzeug erzielt werden müssen, um die Kalibrierung durchzuführen, während der Kalibration Angaben von bereits erzielten Kursen (50) und Angaben von zu erzielenden Kursen (52) ermittelt und anzeigt, um die Kalibrierung zu beenden.

3. Kombiniertes Notfallinstrument nach Anspruch 1, **dadurch gekennzeichnet, dass** der Rechner so konfiguriert ist, dass er auf der Basis eines in einem Speicher des Rechners (32) gespeicherten Programms, das Kurse und Rollen definiert, die von dem Luftfahrzeug erzielt werden müssen, um die Kalibrierung durchzuführen, während der Kalibrierung Angaben von bereits erzielten Kursen und Rollen (50, 54) und Angaben von noch zu erzielenden Kursen und Rollen (52, 54) ermittelt und anzeigt, um die Kalibrierung zu beenden.

4. Verfahren zum Kalibrieren eines kombinierten Notfallinstruments zum Ausstatten der Instrumententafel eines Luftfahrzeugs, das Folgendes umfasst: Wind- und Luftdrucksensoren, Trägheitssensoren, einen Magnetfeldsensor, einen Bildschirm (12) und einen Rechner (32) zum Ermitteln und Anzeigen einer Höhe (42), einer Geschwindigkeit (40), einer Lage (14) und eines aktuellen Kurses (48) des Luftfahrzeugs auf der Basis der Sensoren auf dem Bildschirm, **dadurch gekennzeichnet, dass** es Folgendes beinhaltet, um gleichzeitig erreicht zu werden:
• Ermitteln der Höhe (42), der Geschwindigkeit (40) und der Lage (14) des Luftfahrzeugs und Anzeigen derselben auf dem Bildschirm (12);
• Kalibrieren des Magnetfeldsensors; und
• Anzeigen eines Führers (50, 52, 54) zum Kalibrieren des Magnetfeldsensors auf dem Bilschirm (12).

5. Verfahren nach Anspruch 4, **dadurch gekennzeichnet, dass** es das Kalibrieren des Magnetfeldsensors durch Ausführen der folgenden Vorgänge in Folge beinhaltet:
• Auswählen zwischen einer zweidimensionalen und einer dreidimensionalen Kalibrierung;
• Erfassen von Daten, die von dem Magnetfeldsensor gemessen wurden, durch Verfolgen eines Programms von Kursen, die ohne Rollen im Falle eines zweidimensionalen Kalibrierung oder mit und ohne Rollen im Falle einer dreidimensionalen Kalibrierung abzudecken sind;
• Ermitteln von Kalibrationsfaktoren des Magnetfeldsensors in Abhängigkeit von der ausgewählten Kalibrierung in zwei Dimensionen oder in drei Dimensionen;
wobei der Kalibrationsführer zulässt, dass das Fortschreiten des Programms von Kursen mit und/oder ohne Rollen während der Datenerfassung überwacht werden kann.

## Claims

1. A combined emergency instrument designed to equip the instrument panel of an aircraft and comprising anemobarometric sensors, inertial sensors, a magnetic field sensor, a screen (12) and a computer (32) for determining and for displaying on said screen an altitude (42), a speed (40), an attitude (14) and a current heading (48) of the aircraft on the basis of said sensors and for calibrating said magnetic field sensor, **characterised in that** said computer (32) is configured to simultaneously allow:
• the altitude (42), the speed (40) and the attitude (14) of the aircraft to be determined and displayed on said screen (12);
• said magnetic field sensor to be calibrated; and
• a guide (50, 52, 54) for calibrating said magnetic field sensor to be displayed on said screen (12).

2. The combined emergency instrument according to claim 1, **characterised in that** on the basis of a program stored in a memory of said computer (32), which program defines headings to be reached by the aircraft in order to carry out the calibration, said computer is configured so as to determine and display, during calibration, indications of headings already reached (50) and indications of headings to be reached (52) in order to terminate the calibration.

3. The combined emergency instrument according to claim 1, **characterised in that** on the basis of a program stored in a memory of said computer (32), which program defines headings and rolls to be reached by the aircraft in order to carry out the calibration, said computer is configured so as to determine and display, during calibration, indications of headings and rolls already reached (50, 54) and indications of headings and rolls to be reached (52, 54) in order to terminate the calibration.

4. A method for calibrating a combined emergency instrument designed to equip the instrument panel of an aircraft and comprising anemobarometric sensors, inertial sensors, a magnetic field sensor, a screen (12) and a computer (32) for determining and for displaying on said screen (12) an altitude (42), a speed (40), an attitude (14) and a current heading (48) of the aircraft on the basis of said sensors, **characterised in that** it comprises the following to be achieved simultaneously:
• determining and displaying on said screen (12) the altitude (42), the speed (40) and the attitude (14) of the aircraft;
• calibrating said magnetic field sensor; and
• displaying on said screen (12) a guide (50, 52, 54) for calibrating said magnetic field sensor.

5. The method according to claim 4, **characterised in that** it comprises calibrating said magnetic field sensor by performing the following operations in sequence:
• selecting between a two-dimensional and a three-dimensional calibration;
• acquiring data measured by said magnetic field sensor by following a program of headings to be covered without rolling in the case of a two-dimensional calibration or with and without rolling in the case of a three-dimensional calibration;
• determining calibration factors of said magnetic field sensor as a function of the selected calibration, in two dimensions or in three dimensions;
with said calibration guide allowing the progress of the program of headings to be covered with and/or without roll to be monitored during data acquisition.
